# EUROPÄISCHE PATENTSCHRIFT

(11) **EP 2 014 946 B1**
(45) Veröffentlichungstag und Bekanntmachung des Hinweises auf die Patenterteilung: **26.10.2011**
(21) Anmeldenummer: 08011556.1
(22) Anmeldetag: 26.06.2008
(51) Int. Cl.: F16D 48/06

(54) **Verfahren zur Tastpunktermittlung einer automatisierten Kupplung**
Method for calculating the touch point of an automatic clutch
Procédé de détermination par point de palpage d'un embrayage automatisé

(30) Priorität: 12.07.2007 DE 102007032487
(43) Veröffentlichungstag der Anmeldung: 14.01.2009
(73) Patentinhaber: Schaeffler Technologies GmbH & Co. KG, 91074 Herzogenaurach (DE)
(72) Erfinder: Reuschel, Michael, 77833 Ottersweier (DE)

(56) Entgegenhaltungen:
- WO-A2-03/006841
- DE-A1- 19 540 921

## Beschreibung

Die Erfindung betrifft ein Verfahren zur Steuerung einer Kupplung in einem Hybridantriebsstrang eines Kraftfahrzeugs mit einer Brennkraftmaschine und einer Elektromaschine sowie einer, zwischen diesen wirksam, angeordneten Kupplung.

Hybridantriebsstränge mit einer Brennkraftmaschine und einer Elektromaschine, die mittels einer automatisierten Kupplung verbindbar sind, sind bekannt. Dabei kann die Kupplung während des Starts der Brennkraftmaschine oder während eines Boosterbetriebs mit antreibender Brenn- und Elektromaschine geschlossen oder schlupfend betrieben werden. Bei offener Kupplung kann die Elektromaschine das Fahrzeug allein antreiben oder während einer Schubphase rekuperieren. Je nach Ausgestaltung des Antriebsstranges kann die Kupplung weitere Funktionen zur Trennung und Verbindung der Brennkraftmaschine mit dem Antriebsstrang und/oder der Elektromaschine ausüben.

Bei einer automatisierten Kupplung kann beispielsweise mittels eines elektrischen, hydraulischen, pneumatischen Kupplungsaktors, der diese Funktionsarten auch in kombinierter Form aufweisen kann, eine Betätigungsgröße an der Kupplung eingestellt, die ein gewünschtes Moment über die Kupplung überträgt. Dementsprechend wird zur Regelung beziehungsweise Steuerung der Kupplung an den Kupplungsaktor ein Signal, angelegt, das dem entsprechenden zu übertragenden Moment entspricht. Die Zuordnung dieser Signale zu den Stellsignalen der Kupplung erfolgt in der Regel mittels Korrelationsfaktoren, die in Form einer Gleichung berechnet oder als Kennwerte in einem Kennfeld abgelegt sind und an den aktuellen Zustand der Kupplung samt Kupplungsaktor, beispielsweise in Abhängigkeit von kurzzeitigen Schwankungen bei Temperaturänderungen und/oder von sich über die Lebensdauer der Kupplung ändernden Faktoren wie Verschleiß, angepasst werden können. Von Bedeutung ist hierbei der so genannte Tastpunkt, bei dem die Reibflächen des Ein- und Ausgangsteils der Kupplung in Reibkontakt zueinander treten.

Aus dem Stand der Technik sind verschiedene Möglichkeiten bekannt, beispielsweise wird die Kupplung soweit zugefahren, bis bei stehendem Fahrzeug und bei Leerlaufdrehzahl betriebener Brennkraftmaschine ein Moment über die Kupplung übertragen wird, das von der Motorsteuerung ausgeregelt werden muss, indem beispielsweise ein Leerlaufregler die Leerlaufdrehzahl nachregelt oder eine Momentenbestimmung der Brennkraftmaschine eine Last in Höhe eines vorgegebenen Werts ermittelt.

Die Offenlegungsschrift WO 03/006841 A2 offenbart unter anderem eine Tastpunktadaption gegen den als Bremse wirkenden Verbrennungsmotor im Neutralgang sowie stillstehendem Fahrzeug.

Aufgabe der Erfindung ist eine Erweiterung der Möglichkeiten der Tastpunktbestimmung auf Hybridantriebsstränge.

Die Aufgabe wird durch ein Verfahren zur Steuerung einer automatisierten Kupplung im Antriebsstrang eines Hybridfahrzeuges mit einer Brennkraftmaschine, einer Elektromaschine und einer zwischen diesen wirksamen automatisierten Kupplung gelöst, wobei ein Tastpunkt der Kupplung, bei dem aufgrund eines vorgegebenen Kupplungssollmoments lediglich ein vernachlässigbares Moment über die Kupplung übertragen wird, bestimmt wird, indem eine aus der Elektromaschine gewonnene, dem Kupplungssollmoment zuordenbare Signalantwort ausgewertet wird **dadurch gekennzeichnet dass** die Tastpunktbestimmung bei drehzahlgeregetter Elektromaschine und bei höheren Gängen durchgeführt wird.

Ein derartiges Verfahren erlaubt eine Bestimmung des Tastpunktes bei stillgelegter Brennkraftmaschine. Dieser Betriebszustand tritt bei Hybridantriebssträngen besonders gehäuft auf, da in der Regel die Brennkraftmaschine beim Anhalten des Fahrzeuges insbesondere aus ökonomischen Gründen stillgesetzt wird. Das vorgeschlagene Verfahren bietet daher den Vorteil, dass alternativ oder zusätzlich zu den im Stand der Technik beschriebenen Verfahren zur Tastpunktbestimmung die Kupplung häufiger überprüft werden kann und entsprechende Kennfelder beziehungsweise Kennlinien an den momentanen Betriebszustand der Kupplung und deren Kupplungsaktor adaptiert werden können. Durch dieses Verfahren kann der Fahrkomfort gesteigert und der Verschleiß der Kupplung vermindert werden. Insbesondere sind schnelle Anpassungen des Tastpunktes an wechselnde Temperaturen in der Kupplungsglocke, beispielsweise beim Wechsel von kalten Temperaturen auf Betriebstemperatur im Winterbetrieb, bei Bergfahrten und/oder Anhängerbetrieb etc. von Vorteil.

Das vorgeschlagene Verfahren kann auf alle Kupplungen in Hybridantriebssträngen angewendet werden, bei denen das Eingangs- oder Ausgangsteil mit einer Elektromaschine verbunden ist und die Kupplung geöffnet ist. Dabei kann die Elektromaschine seriell im Hybridantriebsstrang, wobei die Kupplung beispielsweise die Brennkraftmaschine von der Elektromaschine und vom nachfolgenden Getriebe trennt, oder parallel, wobei die Kupplung die Elektromaschine dem Antriebsstrang und/oder der Brennkraftmaschine zuschaltet, vorgesehen sein. Weiterhin kann die Kupplung sowohl Brennkraftmaschine als auch Elektromaschine vom Getriebe trennen. Es versteht sich, dass die vorgenannten Anordnungen und weitere Konfigurationen des Hybridantriebsstranges das vorgeschlagene Verfahren nicht einschränken. Die Elektromaschine kann konzentrisch um die Kurbelwelle oder eine Getriebeeingangswelle oder parallel zu einer dieser Wellen angeordnet sein.

Der Kupplungsaktor kann elektrohydraulisch betrieben sein, indem ein Elektromotor, beispielsweise mittels eines Exzenters einen Geberzylinder betätigt, der über eine hydraulische Strecke Druck auf einen Nehmerzylinder ausübt, der wiederum die Kupplung betätigt. In diesem Falle kann die Zuordnung des zu übertragenden Kupplungssollmoments beispielsweise mittels einer Wegsteuerung des Geberzylinderkolbens oder einer inkrementellen Wegsensorik, die auch im Elektromotor vorgesehen sein kann, erfolgen. Für andere Kupplungsaktoren kann das Kupplungssollmoment mittels anderer Zuordnungsgrößen eingestellt werden, beispielsweise bei pneumatisch oder hydraulisch betätigten Kupplungen mittels des anliegenden Drucks oder bei elektromagnetisch betätigten Kupplungen mittels der angelegten Spannung, des Stroms oder der anderer elektromagnetischer Größen.

Zur Ermittlung des Tastpunktes wird in vorteilhafter Weise ein an die Kupplung angelegtes Kupplungssollmoment zunehmend vergrößert, bis an der Elektromaschine eine dem Kupplungssollmoment zuordenbare Signalantwort erfassbar ist. Es wird also die Kupplung zugefahren, bis die Reibeingriffsflächen von Ein- und Ausgangsteil der Kupplung in Reibkontakt treten und ein minimales Moment auf die Elektromaschine übertragen wird, das durch eine entsprechende Reaktion der Elektromaschine erfassbar ist. Dabei hat es sich als vorteilhaft erwiesen, wenn das Kupplungssollmoment während des Verstellvorgangs moduliert wird. Auf diese Weise kann als Signalantwort ebenfalls eine modulierte Signalantwort ausgewertet werden, die weniger störungsanfällig und sensibler ermittelt werden kann. Derartige Muster des modulierten Kupplungssollmoments können beispielsweise Rechtecke, Rampen oder sinusförmige Muster oder dergleichen sein. Dabei kann es vorteilhaft sein, wenn für die modulierten Muster des Kupplungssollmoments feste Frequenzen gewählt werden, die in einem Bereich vorgesehen werden, in dem keine Eigenfrequenz des Fahrzeugs angeregt wird.

Die Signalantwort wird vorteilhafterweise auf eine Korrelation mit dem modulierten Kupplungssollmoment überprüft, wobei bei als Signalantwort eine Momentenänderung an der Elektromaschine ausgewertet werden kann. In einer vorteilhaften Ausgestaltung kann ein aktuell vorhandener Tastpunkt angefahren und an diesem Punkt eine Modulation des Kupplungssollmomentes erfolgen. Aus dem Vergleich zwischen den Amplituden der Kupplungssollmomente und den als Signalantworten an der Elektromaschine anliegenden Amplituden der Istmomente kann auf die Lage des Tastpunktes geschlossen werden. Sind die Amplituden von Soll- und Istmoment innerhalb einer Toleranz identisch, stimmt der aktuelle Tastpunkt noch. Treten Abweichungen in den Amplituden von Kupplungssollmoment und Istmoment auf, muss der Tastpunkt entsprechend den Abweichungen korrigiert werden, indem zur Erreichung des gewünschten Sollmoments der Kupplungsweg entsprechend korrigiert wird. In ähnlicher Weise kann es vorteilhaft sein, anstatt der Erfassung von Momenten eine Änderung der Drehzahlen der Elektromaschine oder eines Kompensationsstroms oder einer Kompensationsspannung bei vorgegebener, geregelter Drehzahl der Elektromaschine zu ermitteln und bei einer entsprechenden Änderung dieser Größe darauf zu schließen, dass der Tastpunkt erreicht ist. Die Aufprägung einer Modulation der Kupplung, beispielsweise in Form des Kupplungssollmomentes ist in der Weise vorteilhaft, dass Korrelationsverfahren angewendet werden könne, die hohe Rauschanteile beziehungsweise Störungen in der Signalantwort eliminieren können. Dabei können entsprechende vorteilhafte Mess- und/oder Auswertemethoden, beispielsweise so genannte Lock-in-Verfahren oder ähnliche angewendet werden.

Mit dem vorgeschlagenen Verfahren wird eine Tastpunktbestimmung bei drehzahlgeregelter Elektromaschine durchgeführt, beispielsweise bei Betriebszuständen, bei denen bergab mit der Tempomatfunktion gefahren wird, bei Betrieb des Fahrzeug nur mit der Elektromaschine, in Rekuperationsphasen und dergleichen. Erfindungsgemäß werden die Ermittlung und Adaption des Tastpunktes bei höheren Gängen durchgeführt, da die Rückwirkung der aufgeprägten Modulation auf den Antriebsstrang besonders gering ist.

Die Erfindung wird anhand der Figuren 1 bis 3 näher erläutert. Dabei zeigen:
Figur 1 ein Ausführungsbeispiel eines Hybridantriebsstranges,
Figur 2 eine typische Kupplungskennlinie
   und
Figur 3 ein Ausführungsbeispiel der Momentführung einer modulierten Tastpunkadaption.

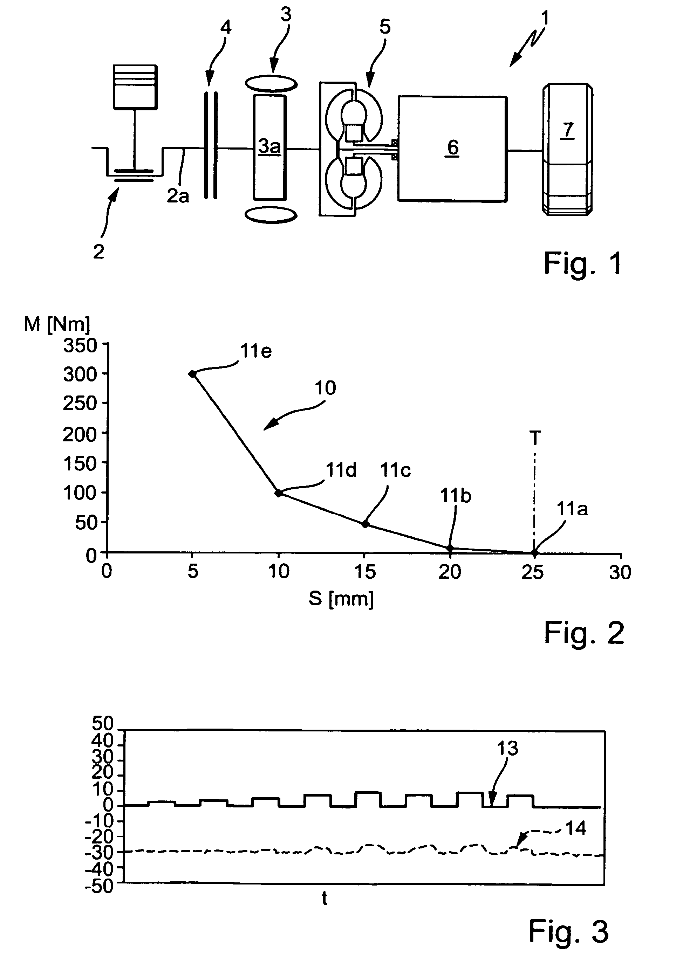

Figur 1 zeigt ein Ausführungsbeispiel eines Hybridantriebsstrangs 1 mit einer Brennkraftmaschine 2 mit einer Kurbelwelle 2a, einer Elektromaschine 3 mit einem Rotor 3a und einer zwischen der Brennkraftmaschine 2 und der Elektromaschine 3 wirksamen Kupplung 4. Eine weitere Kupplung, die in dem gezeigten Ausführungsbeispiel als Drehmomentwandler 5 ausgeführt ist, der zusätzlich über eine Wandlerüberbrückungskupplung verfügen kann, ist zwischen dem Getriebe 6 und der Elektromaschine 3 angeordnet. Das Getriebe 6 überträgt das von den Antriebseinheiten in Form der Brennkraftmaschine 2 und der Elektromaschine 3 einzeln oder gemeinsam generierte Antriebsmoment an die Antriebsräder 7. Soll die Brennkraftmaschine 2 bei geschlossener Kupplung 4 ausschließlich Moment übertragen, wird die Elektromaschine 3 stromlos geschaltet, der Rotor 3a dient dabei als Schwungmasse. Bei Bestromung der Elektromaschine 3 und geschlossener Kupplung 4 übertragen beide Antriebseinheiten Moment auf das Getriebe 6. Soll nur die Elektromaschine 3 antreiben, wird die Kupplung 4 geöffnet. Soll mittels der Elektromaschine 3 abgebremst werden, wird die Kupplung 4 geöffnet und die Elektromaschine 4 als Generator betrieben. Zusätzlich kann zur Erzielung eines größeren Verzögerungseffektes das Schleppmoment der Brennkraftmaschine 2 durch Schließen der Startkupplung 4 genutzt werden.

Die Kupplung 4 wird mittels eines nicht dargestellten Kupplungsaktors betätigt, der wiederum von einem Steuergerät gesteuert wird. Das Steuergerät gibt gemäß einem von dem Steuergerät bestimmten Kupplungssollmoment ein Steuersignal an den Kupplungsaktor aus. Die Korrelation zwischen dem vom Kupplungsaktor an der Kupplung 4 eingestellten Weg und dem Kupplungssollmoment erfolgt im gezeigten Ausführungsbeispiel anhand der Kupplungskennlinie. Unter dem Weg ist der an der Kupplung zu verstehen, der aufgebracht werden muss um die Kupplung 4 zu betätigen. Der von dem Betätigungselement wie Nehmerzylinderkolben, Ausrückhebel und dergleichen zurückgelegte, auf die Tellerfederzungen oder einem Hebel übertragende Weg dient dazu, die Reibeingriffsflächen der Reibpartner, nämlich einer beispielsweise drehfest an der Getriebeeingangswelle angeordneten Reibscheibe mit Reibbelägen und die Reibflächen des kurbelwellenseitig aufgenommenen Kupplungsdeckels einander zu nähern, wobei eine Wegmessung unter Berücksichtigung der im Betätigungsweg wirksamen Hebelverhältnisse an beliebiger Stelle angeordnet sein kann. Es versteht sich, dass das vorgeschlagene Verfahren sowohl für zwangsweise zugedrückte und zwangsweise geöffnete Kupplungen in vorteilhafter Weise angewendet werden kann.

Figur 2 zeigt ein Ausführungsbeispiel einer Zuordnung des über die Kupplung zu übertragenden Moments M über den Weg s in Form einer Kennlinie 10, die durch die Stützstellen 11a, 11b, 11, c, 11d, 11e, 11f aufgespannt wird. Die Anzahl der Stützstellen 11b, 11, c, 11d, 11e, 11f ist prinzipiell beliebig, wird aber in Abhängigkeit von der nötigen Genauigkeit der Darstellung und dem nötigen Aufwand optimiert. Im gezeigten Beispiel wurden zur Darstellung der Kennlinie 10 5 Stützstellen 11b, 11, c, 11d, 11e, 11f gewählt. Die Kennlinie 10 ist auf eine maximale Übertragungskapazität der Kupplung von ca. 300 Nm ausgelegt. Zur Darstellung der Kupplungskennlinie an die bestehenden Verhältnisse der Kupplung werden beispielsweise empirisch bestimmte Stützstellen 11b, 11, c, 11d, 11e, 11f verwendet, die im Laufe des Betriebs des Fahrzeugs mehrfach adaptiert werden. Die Stützstelle 11a entspricht dem Tastpunkt T, bei dem die Kupplung beginnt, Moment zu übertragen. In der Regel ist die Bestimmung des Tastpunktes T einfacher als eine Bestimmung der Stützpunkte 11 b, 11 c, 11 d, 11 e. Es kann daher vorteilhaft sein, bei sich änderndem Tastpunkt T die Kennlinie 10, also die Stützwerte 11 b, 11c, 11 d, 11 e um den Betrag, der sich am Tastpunkt T geändert hat, zu verschieben.

Figur 3 zeigt ein Ausführungsbeispiel für den Verlauf 13 eines Kupplungssollmoments über die Zeit t während einer Tastpunkadaption gemäß des vorgeschlagenen Verfahrens. Das Kupplungssollmoment wird in seiner Höhe in Rechteckform über die Zeit moduliert. Diesem modulierten Kupplungssollmoment folgen entsprechende dem Kupplungsaktor aufgeprägte Wegbewegungen an der Kupplung. Der Kupplungsweg wird dabei so eingestellt, dass sich die Kupplung in der Nähe des Tastpunktes befindet. Beispielsweise kann der zu adaptierende Wert des Tastpunktes eingestellt werden. Der Verlauf 14 zeigt die Signalantwort an der Elektromaschine als erfasstes Istmoment. Der Verlauf 14 zeigt das Rohsignal, das mittels phasenselektiver Verfahren wie Fast-Fourier-Transform-Analysen (FFT) oder wegen seines geringeren Rechenaufwands in Fahrzeugen bevorzugten Lock-In-Verfahrens gefiltert und geglättet werden kann. In vorteilhafter Weise wird zuerst mit kleinen ansteigenden Amplituden des Kupplungssollmoments der Beginn der Momentenübertragung der Kupplung bestimmt und dann bei einer Amplitude, in der eine sichere quantitative Bestimmung des Istmoments möglich ist, mit kleineren Abweichungen von dieser das Istmoment bestimmt. Sollte bei einem voreingestellten Tastpunkt bereits ein Moment über die Kupplung übertragen werden, wird die Kupplung in einen momentenfreien Zustand zurück gefahren und die Messung erneut begonnen.

Eine Korrekturgröße für den Tastpunkt T wird in vorteilhafter Weise aus dem Verhältnis oder der Differenz der Amplituden des Kupplungssollmoments, insbesondere aus den für die qualitative Bestimmung aufgebrachten Amplituden und den an der Elektromaschine erfassten, zu den entsprechenden Amplituden der Kupplungssollmomente korrespondierenden Amplituden der Istmomente, gebildet. Beispielsweise kann die Kennlinie 10 (Figur 2) um einen der so ermittelten Differenz zwischen Kupplungssollmoment und Istmoment entsprechenden Weg s korrigiert werden. Es versteht sich, dass hierbei entsprechende Korrekturgrößen wie Faktoren oder Offsets Anwendung finden können.

### Bezugszeichenliste

| | | | |
|---|---|---|---|
| 1 | Hybridantriebstrang | 11b | Stützpunkt |
| 2 | Brennkraftmaschine | 11c | Stützpunkt |
| 2a | Kurbelwelle | 11d | Stützpunkt |
| 3 | Elektromaschine | 11e | Stützpunkt |
| 3a | Rotor | 13 | Verlauf |
| 4 | Kupplung | 14 | Verlauf |
| 5 | Drehmomentwandler | M | Moment |
| 6 | Getriebe | s | Weg |
| 7 | Antriebsrad | T | Tastpunkt |
| 10 | Kennlinie | t | Zeit |
| 11a | Stützpunkt | | |

## Patentansprüche

1. Verfahren zur Steuerung einer automatisierten Kupplung (4) im Antriebsstrang (1) eines Hybridfahrzeuges mit einer Brennkraftmaschine (2), einer Elektromaschine (3) und der zwischen diesen wirksamen automatisierten Kupplung (4) wobei ein Tastpunkt (T) der Kupplung (4), bei dem aufgrund eines vorgegebenen Kupplungssollmoments lediglich ein vernachlässigbares Moment über die Kupplung (4) übertragen wird, bestimmt wird, indem eine aus der Elektromaschine (3) gewonnene, dem Kupplungssollmoment zuordenbare Signalantwort ausgewertet wird,
**dadurch gekennzeichnet, dass**
die Tastpunktbestimmung bei drehzahlgeregelter Elektromaschine und bei höheren Gängen durchgeführt wird.

2. Verfahren nach Anspruch 1, **dadurch gekennzeichnet, dass** ein an die Kupplung (4) angelegtes Kupplungssollmoment zunehmend vergrößert wird, bis an der Elektromaschine (3) eine dem Kupplungssollmoment zuordenbare Signalantwort erfassbar ist.

3. Verfahren nach Anspruch 2, **dadurch gekennzeichnet, dass** das Kupplungssollmoment moduliert wird.

4. Verfahren nach Anspruch 3, **dadurch gekennzeichnet, dass** die Signalantwort auf eine Korrelation mit dem modulierten Kupplungssollmoment überprüft wird.

5. Verfahren nach einem der Ansprüche 1 bis 4, **dadurch gekennzeichnet, dass** als Signalantwort eine Momentenänderung an der Elektromaschine (3) ausgewertet wird.

6. Verfahren nach einem der Ansprüche 1 bis 5, **dadurch gekennzeichnet, dass** als Signalantwort eine Drehzahländerung der Elektromaschine (3) ausgewertet wird.

7. Verfahren nach einem der Ansprüche 1 bis 5, **dadurch gekennzeichnet, dass** als Signalantwort bei einem Betrieb der Elektromaschine (3) bei vorgegebener Drehzahl eine elektrische Größe ausgewertet wird.

8. Verfahren nach einem der Ansprüche 4 und 5, **dadurch gekennzeichnet, dass** das Kupplungssollmoment rechteckförmig moduliert wird.

9. Verfahren nach Anspruch 8, **dadurch gekennzeichnet, dass** zuerst Kupplungssollmomente mit steigenden und anschließend alternierenden Amplituden übertragen werden.

10. Verfahren nach einem der Ansprüche 4, 5, 8 oder 9, **dadurch gekennzeichnet, dass** eine Korrekturgröße für den Tastpunkt (T) aus dem Verhältnis zwischen den Amplituden des Kupplungssollmoments und den korrespondierenden, an der Elektromaschine erfassten Istmomenten gebildet wird

## Claims

1. Method for controlling an automatic clutch (4) in the drive train (1) of a hybrid vehicle having an internal combustion engine (2), an electrical machine (3) and the automatic clutch (4) which acts between the said internal combustion engine and electrical machine, with a biting point (T) of the clutch (4), at which only a negligible torque is transmitted by means of the clutch (4) on the basis of a predefined setpoint clutch torque, is determined by a signal response which is obtained from the electrical machine (3) and can be assigned to the setpoint clutch torque being evaluated, **characterized in that** the biting point determination process is carried out when the rotation speed of the electrical machine is controlled and in relatively high gears.

2. Method according to Claim 1, **characterized in that** a setpoint clutch torque which is applied to the clutch (4) is increased more and more until a signal response which can be assigned to the setpoint clutch torque can be detected at the electrical machine (3).

3. Method according to Claim 2, **characterized in that** the setpoint clutch torque is modulated.

4. Method according to Claim 3, **characterized in that** the signal response is checked for correlation with the modulated setpoint clutch torque.

5. Method according to one of Claims 1 to 4, **characterized in that** a change in torque to the electrical machine (3) is evaluated as a signal response.

6. Method according to one of Claims 1 to 5, **characterized in that** a change in the rotation speed of the electrical machine (3) is evaluated as a signal response.

7. Method according to one of Claims 1 to 5, **characterized in that** an electrical variable is evaluated as a signal response during operation of the electrical machine (3) at a predefined rotation speed.

8. Method according to either of Claims 4 and 5, **characterized in that** the setpoint clutch torque is modulated in square-wave form.

9. Method according to Claim 8, **characterized in that** setpoint clutch torques are first transmitted with rising amplitudes and then with alternating amplitudes.

10. Method according to one of Claims 4, 5, 8 and 9, **characterized in that** a correction variable for the biting point (T) is formed from the ratio between the amplitudes of the setpoint clutch torque and the corresponding actual torques which are detected at the electrical machine.

## Revendications

1. Procédé de commande d'un embrayage automatisé (4) dans la ligne de transmission (1) d'un véhicule hybride avec un moteur à combustion interne (2), un moteur électrique (3) et l'embrayage automatisé (4) actif entre ceux-ci, dans lequel on détermine un point de palpage (T) de l'embrayage (4), pour lequel seul un couple négligeable est transmis par l'embrayage (4) en raison d'un couple de consigne prédéterminé de l'embrayage, du fait que l'on exploite une réponse de signal associable au couple de consigne de l'embrayage et obtenue à partir du moteur électrique (3), **caractérisé en ce que** l'on effectue la détermination du point de palpage avec le moteur électrique à une vitesse de rotation régulée et à des rapports plus élevés.

2. Procédé selon la revendication 1, **caractérisé en ce** l'on augmente de plus en plus un couple de consigne de l'embrayage appliqué à l'embrayage (4), jusqu'à ce qu'une réponse de signal associable au couple de consigne de l'embrayage soit détectable au moteur électrique (3).

3. Procédé selon la revendication 2, **caractérisé en ce que** l'on module le couple de consigne de l'embrayage.

4. Procédé selon la revendication 3, **caractérisé en ce que** l'on contrôle une corrélation de la réponse de signal avec le couple de consigne de l'embrayage modulé.

5. Procédé selon l'une quelconque des revendications 1 à 4, **caractérisé en ce que** l'on exploite comme réponse de signal une variation du couple au moteur électrique (3).

6. Procédé selon l'une quelconque des revendications 1 à 5, **caractérisé en ce que** l'on exploite comme réponse de signal une variation de la vitesse de rotation du moteur électrique (3).

7. Procédé selon l'une quelconque des revendications 1 à 5, **caractérisé en ce que** l'on exploite comme réponse de signal une grandeur électrique lors d'un fonctionnement du moteur électrique (3) à une vitesse de rotation prédéterminée.

8. Procédé selon l'une quelconque des revendications 4 et 5, **caractérisé en ce que** l'on module le couple de consigne de l'embrayage en forme de rectangle.

9. Procédé selon la revendication 8, **caractérisé en ce que** l'on transmet d'abord des couples de consigne de l'embrayage avec des amplitudes croissantes et ensuite avec des amplitudes alternées.

10. Procédé selon l'une quelconque des revendications 4, 5, 8 ou 9, **caractérisé en ce que** l'on forme une grandeur de correction pour le point de palpage (T) à partir du rapport entre les amplitudes du couple de consigne de l'embrayage et les couples réels correspondants détectés au moteur électrique.
